# EUROPEAN PATENT APPLICATION

(11) **EP 2 787 303 A1**
(43) Date of publication of application: **08.10.2014**
(21) Application number: 13162531.1
(22) Date of filing: 05.04.2013
(51) Int. Cl.: F24J 2/14

(54) **Torque tube for a solar collector, methods of producing and transporting a torque tube**

(71) Applicant: Aalborg CSP A/S, 9000 Aalborg (DK)
(72) Inventor: Hjermitslev, Per Schou, 9740 Jerslev (DK)
(74) Representative: Zacco Denmark A/S

(57) **Abstract**

This invention relates to a torque tube of a solar collector with reflectors supported by reflector support forming a collector structure and arranged to focus solar light from a collection direction to a focal line extending longitudinally; which torque tube is configured to extend in parallel with the focal line of the solar collector, the torque tube comprising:
- at least two torque tube shells configured to be attachable to each other to form the torque tube with a cross section perpendicular to the longitudinal direction and when installed as intended has
- a first tube face essentially flush and perpendicular to the collection direction and formed by different torque tube shells and with a first shell connection configured to connect to a collector structure at the intended intersection of the collection direction facing the solar light; and at the opposite intersection away from the sun light
- at least two second tube faces each of different torque tube shells connecting at a second shell connection configured to connect to a collector structure and in an angle.

## Description

### Field of invention

This invention relates to a torque tube of a solar collector with reflectors supported by reflector support forming a collector structure and arranged to focus solar light from a collection direction to a focal line extending longitudinally; which torque tube is configured to extend in parallel with the focal line of the solar collector. It further relates to a method of producing a torque tube of

### Background of the invention

Solar collector with reflectors configured to reflect and focus sunlight to a heat tube essentially arranged around a focal line. The reflectors are arranged with a parabolic cross section to concentrate sun light onto the focal line. The reflectors are supported by a frame seen as wings or arms extending from a central part of the solar collector.

The reflectors and grid structure essentially defines a trough, which part of the solar collector arrangement is further configured to rotate about an axis parallel to the focal line and to the track and trance position of the sun with some automated tracking system.

The forces of turning are essentially transferred through a central body known as a torque tube, a shaft, a beam, or simply a central body. Such torque tube is known in the art in several forms that however are limited to some extend in strength, durability and flexibility when it comes to producing and It is an objective of this invention to provide better solutions.

Another objective is to provide a simple and effective way to produce and/or assemble a torque tube that is at the same time easy to handle and have a better strength.

### Summary

An objective is achieved by a torque tube of a solar collector with reflectors supported by reflector support forming a collector structure and arranged to focus solar light from a collection direction to a focal line extending longitudinally; which torque tube is configured to extend in parallel with the focal line of the solar collector, the torque tube comprising:
- at least two torque tube shells configured to be attachable to each other to form the torque tube with a cross section perpendicular to the longitudinal direction and when installed as intended has
- a first tube face essentially flush and perpendicular to the collection direction and formed by different torque tube shells and with a first shell connection configured to connect to a collector structure at the intended intersection of the collection direction facing the solar light; and at the opposite intersection away from the sun light
- at least two second tube faces each of different torque tube shells connecting at a second shell connection configured to connect to a collector structure and in an angle.

Thereby is provided a strong torque tube that can be densely packed and transported and assembled to form a torque tube that strong and capable of handling torsion as required.

The placement of the torque tube shell connection in the intended intersection of the collection direction to give strength to the torque tube in the longitudinal direction to reduce or minimise bending of the torque tube.

The first tube face is essentially the top face or the face in the direction of the sun. The first face is essentially flush apart from the tube shell connection. The first face has a plane that will give support to mirrors or reflectors at the top-point. Furthermore the plane face at the intended intersection area will transfer torsion forces into the shell structure.

The opposite two second faces are essentially bottom faces away from the direction of the sun. The two faces are joined together at a torque tube shell connection in an angle, i.e. the two faces do not make a plane or are flush. Thereby the two faces of the torque tube form a large area that will rest on a reflector support and torsion forces will transfer from the two plates.

Preferably the angle between the two faces, in the direction of the solar collection, is larger than 90-degrees to reduce or minimise the risk of collapse.

According to an aspect of the invention, the torque tube shells are formed to create a cross section that is symmetrical about the collection direction. Thereby identical shells can be made that will ease or streamline the production of shells. Another advantage is that the shells can be stacked or packed efficiently.

According to an aspect of the invention, the torque tube shells are formed to create a cross section that has an uneven number of faces. This will easily ensure that the torque tube more effectively redistributes torsion forces. In particular four faces are undesirable since there is a risk of collapse.

According to an aspect of the invention, the torque tube shells are formed to create a cross section that has faces with even lengths. This will even further equalise the distribution of forces thereby making the torque tube easy to produce, to stack and to make with less material as possible for a given strength.

According to an aspect of the invention, the torque tube shells are formed to create a cross section that is a regular polygon; such as a heptagon, a pentagon, a triangle, a nonagon, a hendecagon, ...

Thereby having a torque tube that resembles a circular cross section well suited for transferring torsion forces, and furthermore has the advantage of having faces that can support and be supported.

It has been found that the heptagon is a good starting point has it has advantages of being close enough to the circular cross section and at the same time has the first face and the two second faces and a reasonably low number of bends or faces making it easy to produce. Furthermore the shells are still stackable.

According to an aspect of the invention, the torque tube shells are made of shells with substantial perforations in the longitudinal direction to form a lattice. By substantial perforations is understood not just a hole, but perforations of a size that results in weight saving or material saving but with substantially the same strength. In an embodiment the shell structure between the first and second faces are made as a lattice or a grid.

According to an aspect of the invention, the shell connections are formed to essentially extend in the collection direction thereby giving strength to the torque tube in collection direction as understood as the direction implied by the direction of the sun.

In an embodiment the shell connections extend outwardly, which make them easy to access to assemble. In an embodiment the shell connections extend inwardly, which make the first face flush across the shell connections

The torque tube shells may be configured to be connectable by sliding one and another together in the longitudinal direction.

According to an aspect of the invention, the torque tube shells have complementary shell connection s with perforations to receive bolts, studs or likewise connection means to connect two tube shells to form a shell connection.

The connection or fastening points such as the perforations and bolts may be equally distributed along or distributed at the end regions and around certain spots along the torque tube.

According to an aspect of the invention, the torque tube shells have complementary shell connections with folds that are configured to make a clip-on shell connection.

Thereby providing an easy connection system that does not requires time consuming usage of tools to connect two shells.

According to an aspect of the invention, the clip-on shell connections extend inwardly and thereby maintain a flush first face across the connection.

According to an aspect of the invention, the torque tube further comprises at least one torque tube end plate formed with the cross section interface configured to connect and support the torque tube shells. This will further stabilise the torque tube and further provide an interface for actually turning the torque tube plate.

According to an aspect of the invention, the torque tube comprises torque tube shells made of multiple shell segments. This will allow for each torque tube shell to be made of plates, planar or curved, that can be stacked or packed and transported before being assembled at a particular site. Another advantage is that similar shell segments can be made using one or a few identical processes.

According to an aspect of the invention, the shell segments are configured with shell segment connections made of a shell segment male part and shell segment female part to form a shell segment clip-on connection or a shell segment slide-on connection.

Generally, person skilled in the art will find it natural to chose the material for the torque tube shells and/or the shell segments according standard metals or alloys. The person skilled in the art will also appreciate the usage of materials other than metals or alloys and will further be inspired to combine materials that have the required properties in particular in respect to temperature changes.

An objective is achieved by a solar collector structure of a solar collector with reflectors arranged to focus solar light from a collection direction to a focal line extending longitudinally; which solar collector structure comprises reflector support configured to support reflectors and to connect with a torque tube as disclosed with an essentially complementary first collector face to the first tube face and with essentially complementary second collector faces to the second tube faces.

An objective of this invention is achieved by a method of producing a torque tube as disclosed, the method comprising:
- providing a sheets of material extending longitudinally in a length of the torque tube and perpendicularly extending in length(s) of the arch length(s) of the torque tube shell(s) or shell segments;
- bending the sheets of material in the longitudinal direction to form a torque tube shell with bends forming a cross section of the torque tube or bending the sheet of material in the longitudinal direction to form shell segments with shell segment flanges with bends forming a cross section of the torque tube;
- assembling the torque tube by connecting the torque tube shells and/or the shell segments.

This method provides an easy and streamlined way of producing a torque tube than hereto.

According to an aspect of the invention the method of producing a torque tube further comprising
- perforating the sheets of material with perforations located so that when the sheets are bend, the perforations provide:
   - perforations for torque tube connection between the torque tube shell ; and/or
   - lattice structure of the torque tube shell .

This further allows for reducing weight of the torque tube and to save material.

An objective is achieved by a method of transporting a torque tube of a solar collector as disclosed with reflectors supported by reflector support forming a collector structure and arranged to focus solar light from a collection direction to a focal line extending longitudinally; the method comprising:
- producing torque tube shells or shell segments at a first site;
- stabling torque tube shells or shell segments;
- transporting the stabled torque tube shells or shell segments from the first site to a second site;
- mounting the torque tube shells or shell segments as intended to form a torque tube at the second site.

This method provides an effective production process at one location a compact transport of the system and an effective assembly at another location.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

### Brief Description of Drawings

Embodiments of the invention will be described in the figures, whereon:
Fig. 1 illustrates a solar collector with a torque tube;
Fig. 2 illustrates a cross section of a solar collector with a torque tube;
Fig. 3 illustrates an exploded isometric view of torque tube shells and end plates;
Fig. 4 illustrates an assembled isometric view of a torque tube;
Fig. 5 illustrates a particular geometrical shape, the heptagon, of a cross section of a torque tube; in particular an end plate is seen;
Fig. 6 Illustrates a detail of an alignment plate to make a first face of a torque tube flush; and
Fig. 7 illustrates a particular embodiment of a torque tube plate made of segments.

### Detailed Description

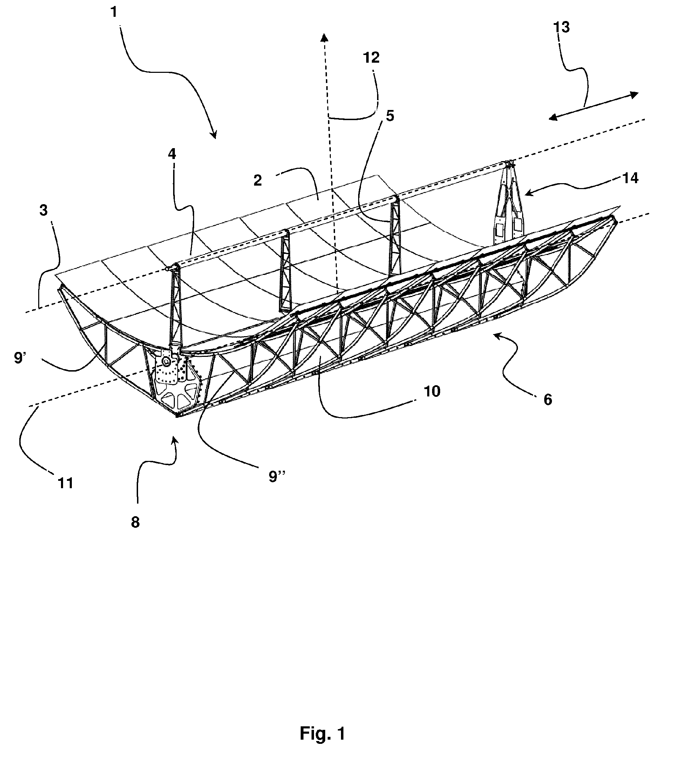

Fig. 1 illustrates a solar collector 1 with reflectors 2 configured to concentrate solar light on a focal line 3, which is substantially covered by a receiver tube 4 in which a fluid is heated and transported. The receiver tube 4 is supported by one or more receiver tube supports 5 to a collector structure6.

In this embodiment the collector structure5 comprises a collection Reflector support 7 arranged to form a support of the reflectors 2 and configured as a Reflector support pair 8 of wings 9, say a first reflector support 9' and a second reflector support 9".

To further support the collector structure6 and to make it operate as intended the collector structure6 comprises a torque tube 10 essentially arranged in parallel with the focal line 3 and to rotate, turn or pivot about a torque tube axis 11 ideally arranged in parallel with the focal line 3.

The solar collector 1 is configured to operate so that it can be oriented so that a line perpendicular to the torque tube axis 11 going through the foal line 3 points in a solar collector direction 12. Typically the solar collector 1 or multiple solar collectors 1 will be continued to extend along the focal line 3 in a longitudinal 13 direction.

The solar collector 1 is further configured with a Tracking system 14 or a tracking system so that the solar collector 1 can change the collector direction 12 to Tracking or track the position of the sun during the day and time of the year.

In an embodiment the reflectors 2 are formed parabolic ally, i.e. with a parabolic cross section and thus known to a person skilled in the art as a parabolic trough.

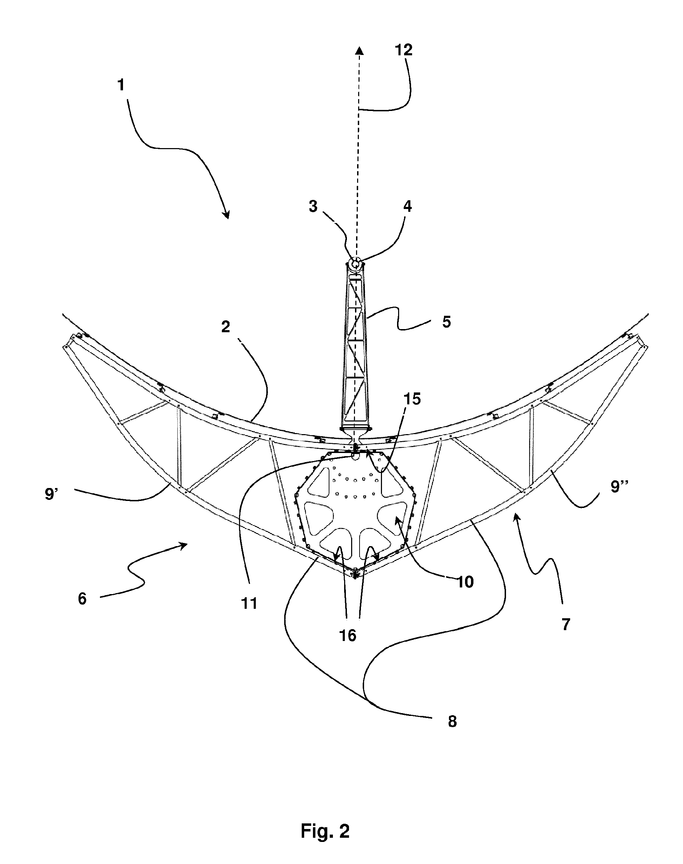

Fig. 2 shows in continuation of fig. 1 a cross section of the longitudinal direction 13 of the solar collector 1. In particular it is seen that the collector structure6 have Reflector support 7 configured with a first collector face 15 towards the collector direction 12 and two second collector faces 16 away from the collector direction 12.

It is seen that the Reflector support 7 of the collector structure6 are configured to fit the torque tube 10. Likewise the torque tube 10 is configured to Reflector support 7 of the collector structure6.

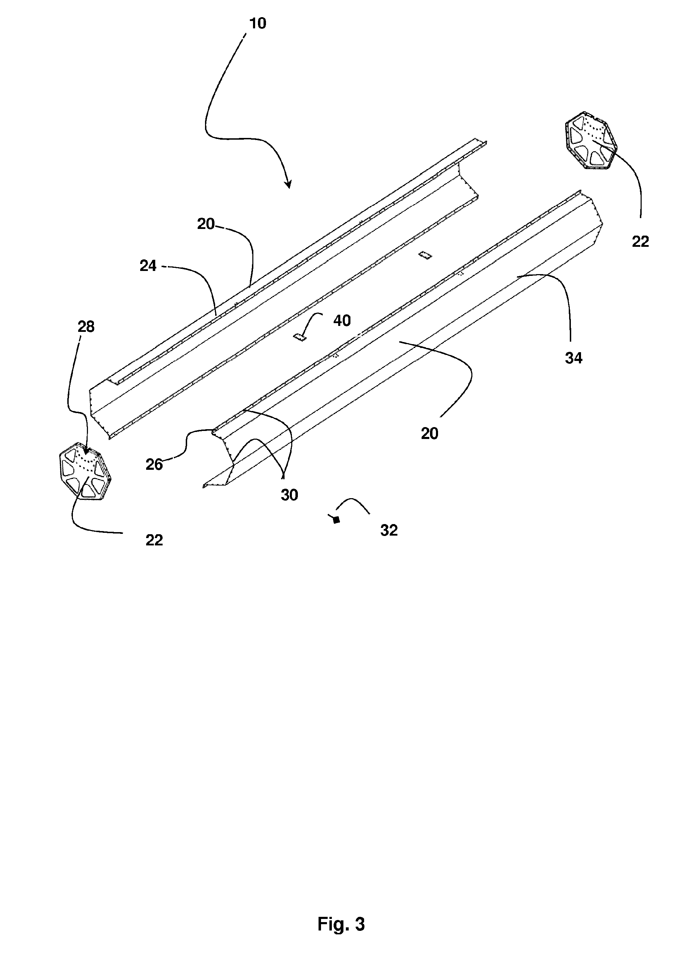

Fig. 3 shows a torque tube 10 assembly comprising torque shells 20 and Torque tube end plates 22. The Torque tube end plates 22 are configured with torque tube tracking interface 28 made as perforations and or guides to position the torque guide 10 in a desired position.

In this embodiment there are two torque tube shells 20 with a torque tube shell connection 24 for connecting the torque tube shells 20 to form a torque tube 10. In particular the torque tube shells 20 have a flange 26 extending the longitudinal direction and with perforations 30 for bolts 32 to securely and rigidly connect the torque tube shells 20 together. In this embodiment the flange 26 extends outwardly.

Each torque tube shells 20 have further perforations 30 at each end to connect Torque tube end plates 22 to further strengthen the torque tube 10.

In particular it is seen that each torque tube shell 20 has one or more bends 34 performed so that the torque tube shells 20 when connected form a torque tube 10.

Furthermore the particular embodiment has a Tube face aligner 40 shell for further strengthening and enforcing the connection of torque tube shells 20.

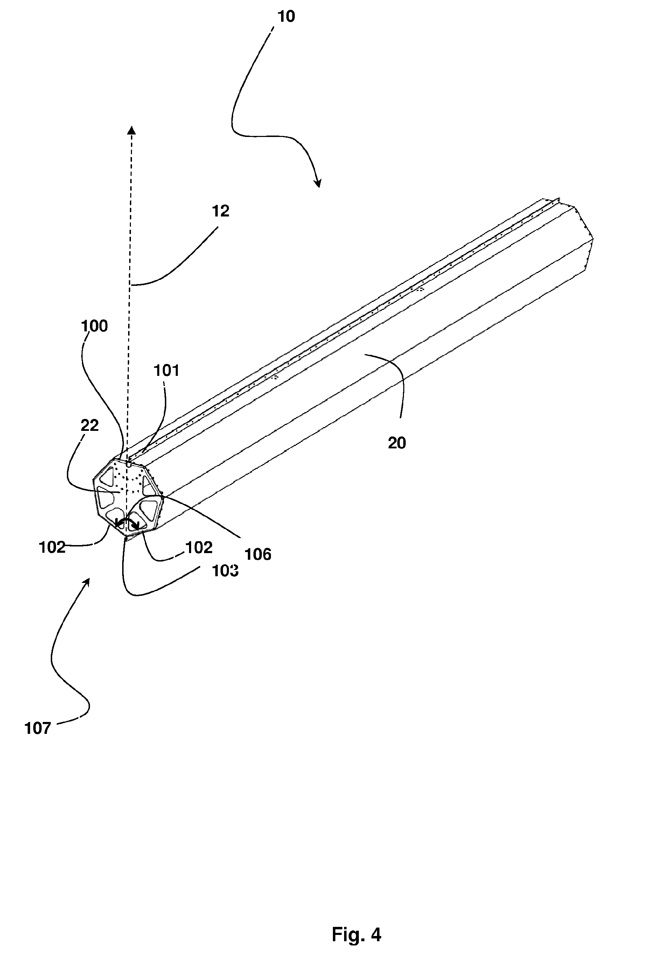

Fig. 4 illustrates in continuation of fig. 3 a torque tube 10 assembled from torque tube shells 20 and Torque tube end plates 22. In particular the torque tube 10 is to be connected or interacting with Reflector support 7 as disclosed. The torque tube shells 20 are formed so that at least two torque tube connections 24 are formed to be in the collector direction 12 when the torque tube 10 is installed in the collector structure 10.

In particular the torque tube 10 has a first torque tube face 100 with a first torque tube shell connection 101 in the direction towards the collector direction 12 and for facing a first collector face 15. It is understood that each torque tube shell 20 has a part of the first torque tube shell face 100. Without the torque tube shell connection 101 the torque tube shells 20 would ideally flush to form the first torque tube shell face 100.

The first torque tube shell connection 101 will make the torque tube 10 more rigid and reduce or prevent bending of the torque tube 10 in the longitudinal direction.

Likewise the torque tube 10 has at least two second torque tube face 102 with a second torque tube shell connection 103 in the direction away from the collector direction 12 and for facing second collector faces 16. The two torque tube faces 102 are in this embodiment on different torque tube shells 20.

The torque tube shells 20 are bend 34 so that in a torque tube cross section 105 the two tube faces 102 meet in an angle 106. (It is understood that an angle implies not being flush).

The second torque tube shell connection 103 is plane of and away from the collector direction 12. Thus the second torque tube shell connection 103 will make the torque tube 10 more rigid and reduce or prevent bending of the torque tube 10 in the longitudinal direction.

Having both the first torque tube connection 101 and the second torque tube connection 103 in the plane as the collection direction 12 will even further strengthen the torque tube 10.

Having the first torque tube face 100 perpendicular to the collection direction 12 will enable a suitable support for the Reflector support 7 of the collector structure6. In particular this results in a planar support for the reflectors 2.

In this embodiment the cross section 105 of the torque tube 10 is a heptagon 107. It has been found that the heptagon 107 balances the number of sides that results in faces 100, 102, is made by a relative low number of bends 34 and approaches a circular cross section.

Furthermore having two torque tube shells 20 that are symmetrical about the collection direction 12 will enable simplified manufacturing. Finally the shells are easy to stack and will take up less space than torque tube with a single structure with circular cross section.

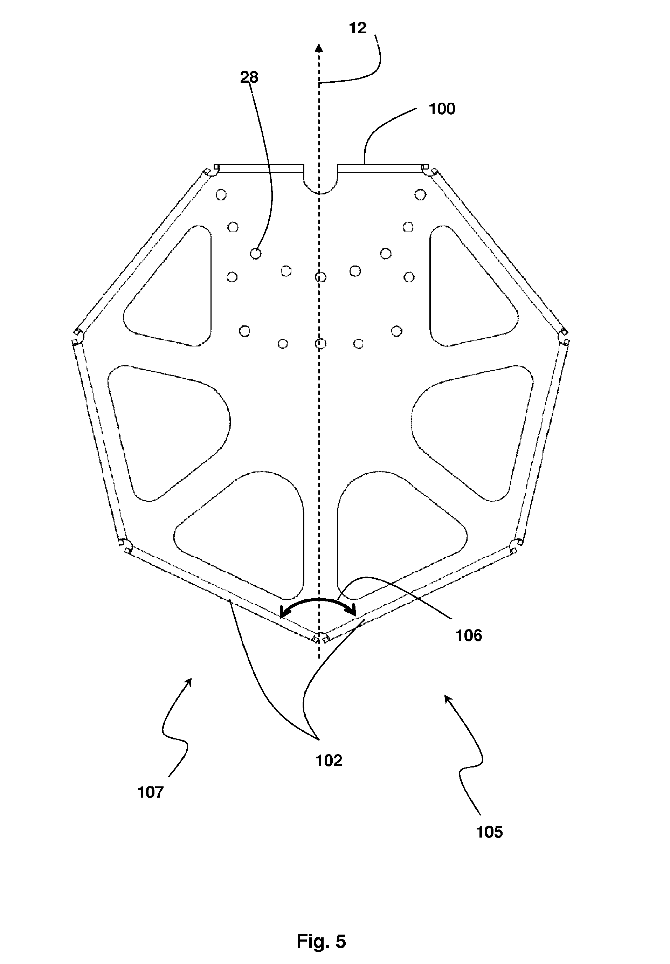

Fig. 5 shows a Torque tube end plate 22 with a cross section 105 and seen in a cross section perpendicular to the torque tube axis. The Torque tube end plate 22 has a form that matches the torque tube 102 and that the torque tube shells 20 extend behind the Torque tube end plate 22.

The cross sectional form is a heptagon 107 arranged with a first tube face 100 perpendicular to the collection direction 12 or the intended direction when the torque tube is installed in the solar collector 1.

Furthermore the two second tube faces 102 meeting at the intersection of the collector direction 12 and forming an angle 106 is seen.

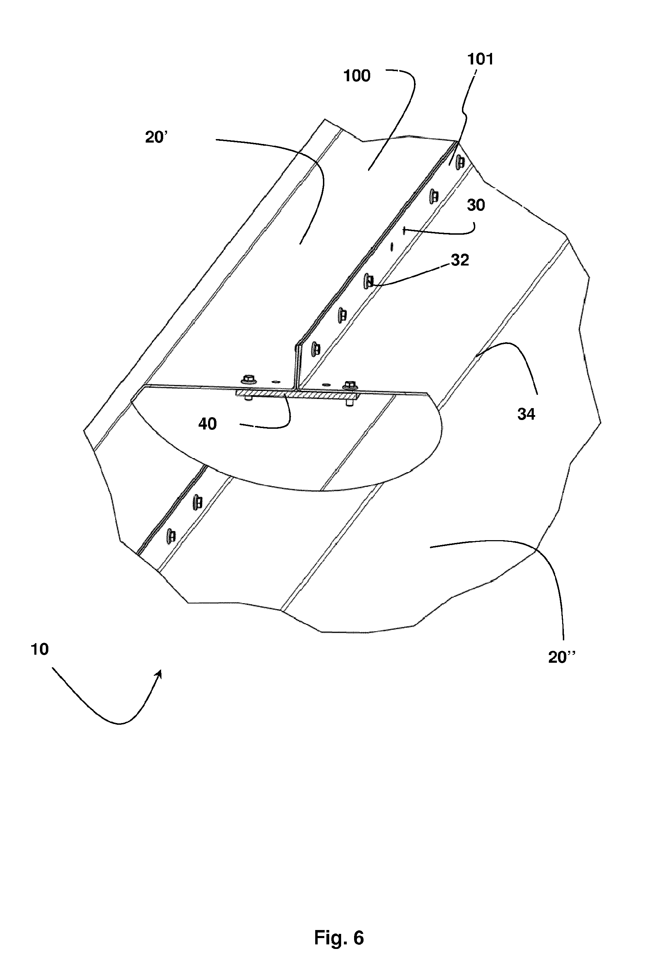

Fig. 6 details a cut-through of an assembled torque tube 10 comprising a first torque tube shell 20' and a second torque tube shell 20". Each torque tube shells 20 with bends 34 to form the desired cross section.

In particular it is detailed how the tube face aligner 40 is aligns the two torque tube shells 20', 20" to form a flush first tube face 100. In this embodiment the tube face aligner 40 is placed on the inside of the torque tube 10 and there is the first torque tube shell connection 101 on the opposite and external side of the torque tube 10.

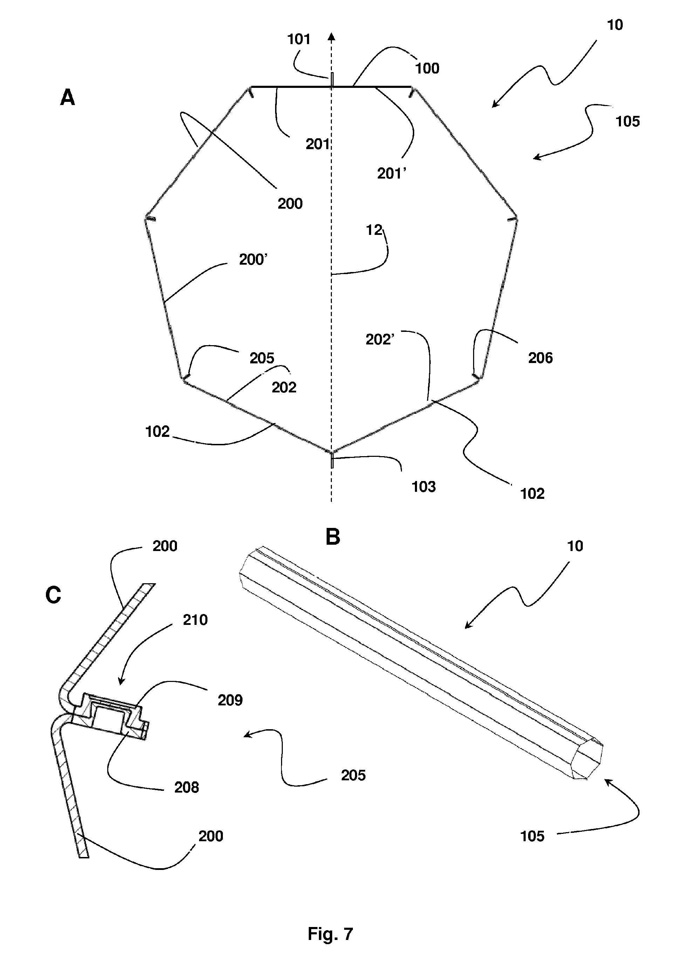

Fig. 7 shows a particular embodiment of torque tube 10 depicted in fig. 7A, B, and C.

Fig. 7A shows cross section 105 of a torque tube 10 formed as a heptagon. The torque tube 10 comprises two torque tube shells 20 that are symmetrical abut an intended collection direction 12. The torque tube shells 20 comprises shell segments 200 that are basis elements here made as each face or side in the heptagon.

There is a first shell segment 201 type formed to make the first torque tube shell connection 101. Due to the symmetry two identical first shell segments 201 can form the first tube face 100.

There is also a second shell segment 202 type formed to make the second torque tube shell connection 103. Due the symmetry two identical or essentially identical second shell segments 202 can form the second tube faces 102.

Fig. 7B illustrates an assembled torque tube 20 based on shell segments 200 with a cross section 105 as a heptagon.

Fig. 7C illustrates details about a shell segment connection 205. The shell segment flanges at the end of each segment are formed with either a shell segment male part 208 or a shell segment female part 209 configured with near complementary forms to make a shell segment clip-on connection 210 or alternatively a slide-on connection. A person skilled in the art will appreciate shell segment male parts 208 and shell segment female parts 209 will have to be distributed on the shell segment flanges 206 so that they match each other all way round.

One distribution of male and female parts for the heptagon can be that a first shell segments 201', 201" have a female part, which connect to a shell segment 200 on each side with two male parts, again followed by a shell segment 200' with two female parts, and then finished by two second shell segments 202', 202" with a male part. Thereby is provided a series of identical shells.

**List of references**

| | |
|---|---|
| Solar collector | 1 |
| Reflectors /Mirrors | 2 |
| Focal line | 3 |
| Receiver tube | 4 |
| Receiver tube support | 5 |
| Collector structure | 6 |
| Reflector support | 7 |
| Reflector support pair | 8 |
| First reflector support, second reflector support | 9 |
| Torque tube | 10 |
| Torque tube axis | 11 |
| Solar collector direction | 12 |
| Longitudinal | 13 |
| Tracking system | 14 |
| First collector face | 15 |
| Second collector face | 16 |
| Torque tube shell | 20 |
| Torque tube end plate | 22 |
| Torque tube shell connection | 24 |
| Flange | 26 |
| Torque tube Tracking interface | 28 |
| Perforations | 30 |
| Bolts | 32 |
| Bend | 34 |
| Tube face aligner | 40 |
| First tube face | 100 |
| First torque tube shell connection | 101 |
| Second tube faces | 102 |
| Second Torque tube shell connection | 103 |
| Torque tube cross section / Cross section | 105 |
| Angle | 106 |
| Heptagon | 107 |
| Shell segment | 200 |
| First shell segment | 201 |
| Second shell segment | 202 |
| Shell segment connection | 205 |
| Shell segment flange | 206 |
| Shell segment male part | 208 |
| Shell segment female part | 209 |
| Shell segment clip-on connection | 210 |

## Claims

1. Torque tube (10) of a solar collector (1) with reflectors (2) supported by reflector support (7) forming a collector structure (6) and arranged to focus solar light from a collection direction (12) to a focal line (3) extending longitudinally (13); which torque tube (10) is configured to extend in parallel with the focal line (3) of the solar collector (1), the torque tube (10) comprising:
- at least two torque tube shells (20) configured to be attachable to each other to form the torque tube (10) with a cross section (105) perpendicular to the longitudinal direction (13) and when installed as intended has
- a first tube face (100) essentially flush and perpendicular to the collection direction (12) and formed by different torque tube shells (20) and with a first shell connection (101) configured to connect to a collector structure (6) at the intended intersection of the collection direction (12) facing the solar light; and at the opposite intersection away from the sun light
- at least two second tube faces (102) each of different torque tube shells (20) connecting at a second shell connection (103) configured to connect to a collector structure (6) and in an angle (106).

2. Torque tube (10) according to claim 1, wherein the torque tube shells (20) are formed to create a cross section (105) that is symmetrical about the collection direction (12).

3. Torque tube (10) according to claim 1 or 2, wherein the torque tube shells (20) are formed to create a cross section (105) that has an uneven number of faces (100,102).

4. Torque tube (10) according to any of claim 1 to 3, wherein the torque tube shells are formed to create a cross section (105) that has faces (100,102) with even lengths.

5. Torque tube (10) according to any of claim 1 to 4, wherein the torque tube shells (20) are formed to create a cross section (105) that is a regular polygon; such as a heptagon, a pentagon, a triangle, a nonagon, a hendecagon, ...

6. Torque tube (10) according to any of claim 1 to 5, wherein the torque tube shells (20) are made of shells with substantial perforations in the longitudinal direction (13) to form a lattice.

7. Torque tube (10) according to any of claim 1 to 6, wherein the shell connections (20) are formed to essentially extend in the collection direction (12).

8. Torque tube (10) according to any of claim 1 to 7, wherein the torque tube shells (20) have complementary shell connection s (24) with perforations (30) to receive bolts (32), studs or likewise connection means to connect two tube shells (20) to form a shell connection (24).

9. Torque tube (10) according to any of claim 1 to 7, wherein the torque tube shells (20) have complementary shell connections (24) with folds that are configured to make a clip-on shell connection (24).

10. Torque tube (10) according to claim 9, wherein the clip-on shell connections (24) extends inwardly.

11. Torque tube (10) according to any of the preceding claims, wherein the torque tube (10) further comprises at least one torque tube end plate (22) formed with the cross section (105) interface configured to connect and support the torque tube shells (20).

12. Torque tube (10) according to any of the preceding claims, wherein the torque tube (10) comprises torque tube shells (20) made of multiple shell segments (200).

13. Torque tube (10) according to claim 12, wherein the shell segments (200) are configured with shell segment connections (205) made of a shell segment male part (208) and shell segment female part (209) to form a shell segment clip-on connection (210) or a shell segment slide-on connection.

14. Solar collector structure(6) of a solar collector (1) with reflectors (2) arranged to focus solar light from a collection direction (12) to a focal line (3) extending longitudinally (13); which solar collector structure(6) comprises Reflector support (7) configured to support reflectors (2) and to connect with a torque tube (10) according to any of claim 1 to 13 with an essentially complementary first collector face (15) to the first tube face (100) and with essentially complementary second collector faces (16) to the second tube faces (102).

15. Method of producing a torque tube (10) according to any of claim 1 to 13, the method comprising:
- providing a sheets of material extending longitudinally in a length of the torque tube (10) and perpendicularly extending in length(s) of the arch length(s) of the torque tube shell(s) (20) or shell segment s (200);
- bending the sheets of material in the longitudinal direction to form a torque tube shell (20) with bends (34) forming a cross section (105) of the torque tube (10) or bending the sheet of material in the longitudinal direction to form shell segments (200) with shell segment flanges (206) with bends forming a cross section (105) of the torque tube (10);
- assembling the torque tube (10) by connecting the torque tube shells (20) and/or the shell segments (200).

16. Method of producing a torque tube (10) according to claim 13, further comprising
- perforating the sheets of material with perforations located so that when the sheets are bend, the perforations provide:
- perforations for torque tube connection (24) between the torque tube shell (20); and/or
- lattice structure of the torque tube shell (20).

17. Method of transporting a torque tube (10) according to any of claim 1 to 14 of a solar collector (1) with reflectors (2) supported by reflector support (7) forming a collector structure (6) and arranged to focus solar light from a collection direction (12) to a focal line (3) extending longitudinally (13); the method comprising:
- producing torque tube shells (10) or shell segments (200) at a first site;
- stabling torque tube shells (20) or shell segments (200);
- transporting the stabled torque tube shells (20) or shell segments (200) from the first site to a second site;
- mounting the torque tube shells (20) or shell segments (200) as intended to form a torque tube (10) at the second site.
